# EUROPEAN PATENT SPECIFICATION

(11) **EP 0 896 740 B1**
(45) Date of publication and mention of the grant of the patent: **21.06.2000**
(21) Application number: 97916518.0
(22) Date of filing: 08.04.1997
(51) Int. Cl.: H01M 8/02, H01M 10/02, H01M 2/18

(54) **PROCESS FOR THE FABRICATION OF ELECTROCHEMICAL CELL COMPONENTS**
VERFAHREN ZUR HERSTELLUNG VON ELEKTROCHEMISCHEN ZELLENBAUTEILEN
PROCEDE DE FABRICATION DE COMPOSANTS DE CELLULES ELECTROCHIMIQUES

(30) Priority: 10.04.1996 GB 9607398
(43) Date of publication of application: 17.02.1999
(73) Proprietor: NATIONAL POWER PLC, Swindon, Wiltshire SN5 6PB (GB)
(72) Inventor: COOLEY, Graham, Edward, Fernham nr. Faringdon, Oxon SN7 7PE (GB); OATES, Herbert, Stephen, Broome Manor, Swindon SN3 1ND (GB); MALE, Stewart, Ernest, East Grinstead, West Sussex RH19 3QG (GB); WISE, Roger Jeremy, Newmarket, Suffolk CB8 0AF (GB)
(74) Representative: Allard, Susan Joyce
(86) International application number: GB9700976
(87) International publication number: WO9738461

(56) References cited:
- EP-A- 0 145 259
- EP-A- 0 339 114
- WO-A-94/25995
- WO-A-95/16730
- US-A- 5 187 025
- PATENT ABSTRACTS OF JAPAN vol. 95, no. 003 & JP 07 065847 A (KANSAI ELECTRIC POWER CO INC:THE;OTHERS: 01), 10 March 1995,
- PATENT ABSTRACTS OF JAPAN vol. 012, no. 299 (C-520), 15 August 1988 & JP 63 072305 A (FUJI PHOTO FILM CO LTD), 2 April 1988,

## Description

The present invention relates to a process for the fabrication of electrochemical cell components and, in particular, to a process for joining a membrane to a frame, the said membrane constituting a component of an electrochemical cell such as a fuel cell or a cell for energy storage and/or power delivery.

Ion exchange membranes have been proposed for use in various electrochemical applications, including chlor-alkali cells, fuel cells and energy storage/ power delivery devices. In these devices the ion exchange membrane serves to separate the compartments of the cell, whilst providing a conducting pathway for ions through the cell.

Ion exchange membranes for use in such electrolytic cells may be films of fluoropolymers containing acidic groups or derivatives of acidic groups. Examples of cation exchange membranes are Nafion (DuPont), Flemion (Asahi Glass) and Aciplex (Asahi Chemical). An example of an anion exchange membrane is Tosflex (Tosoh Corporation).

When incorporating ion exchange membranes into electrochemical cells it is important for the membrane to be located in the cell in such a manner that a good joint is formed, to ensure that the membrane becomes an integral part of a membrane frame electrode assembly. Industrial electrolytic or galvanic cells, such as secondary batteries, fuel cells and electrolysers, typically consist of modules which each comprise a number of stacked, layered components which are clamped together in a stack. For example, in a secondary battery of the redox flow type the components typically consist of electrically insulating flow-frames, each containing an electrode, with a plurality of such flow-frames being sandwiched together with other components such as membranes and meshes. The membranes are generally laid in the wet swelled form between the other components and some membranes have a tendency to tear, crease, fold or puncture as the stack of components is being assembled. An improved method of incorporating the membrane into the cell, which also provides support to the membrane during cell assembly, is required.

WO 94/25995 A to LEDJEFF et al. discloses a method of bonding an ion-conducting polymer membrane (PEM) made from modified base material to a polymeric, frame-shaped base material . In accordance with one embodiment, a sheet of the polymeric base material (preferably an aromatic polyethersulfone, PES) is provided with a square cut-out portion. The ion exchange membrane is fixed in this cut-out portion and bonded to the frame-like base sheet using an adhesive system. The adhesive preferably contains a solution of the polymeric base material in a solvent which dissolves both the ion exchange material and the base material.

Whilst it would be advantageous to join the membrane to a surrounding frame member, in order to assist in the location of the membrane in the cell and to facilitate cell construction, the materials from which ion exchange membranes are formed are not generally readily joinable to a frame member by conventional techniques, such as by welding, since the polymeric material of the membrane will generally be hydrophilic and the polymeric material of the frame member will generally be hydrophobic. We have now developed a process for joining a membrane to a frame member which overcomes these problems.

Accordingly, the present invention provides a process for the fabrication of an electrochemical cell component which comprises an ion exchange membrane joined to a frame member formed from a dissimilar polymeric material, which process comprises the steps of:
i) coating the border of at least one face of a water-containing ion exchange membrane with a solution in a water-miscible solvent of the polymeric material from which the said frame member is made, or of a polymeric material which is compatible with the polymeric frame material;
ii) optionally allowing the said coated membrane to stand and/or drying the said coated membrane;
iii) placing the coated face of the ion exchange membrane from step (i) or step (ii) in contact with the said frame member; and
iv) joining the coated ion exchange membrane to the said frame member.

In carrying out the process of the present invention a coating solution is prepared of a polymeric material in a solvent which is miscible with water. The polymeric material is either the same material as that from which the frame is made, or a polymeric material which is compatible therewith. Preferred materials for the construction of the frame are poly(vinylidene fluoride), poly(vinyl chloride), polyurethane or poly(methyl methacrylate). These are therefore the polymers of choice for the formation of the coating solution.

The solvent for the formation of the coating solution is a solvent which is miscible with water. It will be understood that the term "miscible" is intended to include within its scope solvents which are partially or fully miscible with water. This is because the ion exchange membranes contain water and by choosing a solvent for the coating solution which is miscible with water the coating solution is able to impregnate the membrane.

Solvents which are miscible with water are polar solvents such as methanol, ethanol, dimethyl formamide, dimethylsulfoxide, tetrahydrofuran or N-methyl-pyrrolidone.

The coating solution is coated onto the border of at least one face of the ion exchange membrane by conventional techniques such as roller coating, K-bar coating, painting or screen printing. The particular choice of coating method is not critical to the present invention, providing that an even coating around the border of the membrane can be achieved. It may be advantageous to mask the area of the membrane which is not to be coated since this provides dimensional stability to the membrane.

The concentration of the polymeric material dissolved in the solvent will generally be in the range of from 0.2 to 20% weight by volume of the solvent, preferably 2 to 5% by weight of volume of the solvent.

The ion exchange membrane which is coated in accordance with the present invention may be a fluoropolymer containing acidic groups or derivatives of acid groups. For example, ion exchange membranes which may be used are the copolymers of tetrafluoroethylene and a sulfonated or carboxylated vinyl ether such as those sold under the trade names of Nafion (DuPont), such as Nafion 112, 115 or 117, or Flemion (Asahi Glass). Another perfluorinated cation exchange membrane which may be used in the present invention is Aciplex (Asahi Chemical). Another membrane which may be modified according to the invention is a cation exchange membrane which is a polystyrene sulfonate membrane from Tokuyama Soda sold as Neosepta CM1, Neosepta CM2, Neosepta CMH, Neosepta CMX and Neosepta CMS, and Selemion (Asahi Glass).

Other membranes which may be used in the present invention are heterogeneous membranes such as those based on polystyrene sulfonate ion exchange resin blended with another polymer such as polyethylene. Another type of membrane which may be used is a post-irradiation grafted membrane. An example of an anion exchange membrane which may be used in the present invention is Tosflex (Tosflex Corporation).

The ion exchange membrane which is used in the present invention will generally have a thickness in the range of from 25 to 250µm, more preferably from 50 to 125µm.

The membrane coated around its border in step (i) of the process of the present invention is preferably allowed to stand or dried before it is joined to the frame member. When the coated membrane is allowed to stand it is believed that beneficial effects may be achieved by the solvent percolating into the pores of the membrane, or by the solvent softening the surface of the frame. When the coated membrane is dried, the drying may either be carried out at room temperature, or by heating as required.

The coated face of the membrane is then contacted with the frame member and the assembly joined together, generally using a combination of heat and pressure to achieve satisfactory joints. The assembly is preferably heated to a temperature at or above the melting point of the polymeric material of the frame, but below the temperature at which the membrane material degrades, so that the polymer material softens and forms a joint with the membrane material. For example, for joining poly(vinylidene fluoride) to Nafion the temperature range will generally be in the range of from about 170°C to 300°C. Suitable techniques for achieving joints between the membrane and the frame member include induction welding, hot bar welding, hot gas welding or ultrasonic welding.

A particular advantage which is associated with the present invention is that the edges of the membrane are heat sealed during the processing steps and this prevents the membrane wicking, which has been a problem in the past.

The frame/membrane assembly which is produced according to the process of the present invention makes it easier to handle the membrane and provides an easy way of locating the membrane in a cell structure of the type as discussed above. The present invention thus includes within its scope a frame/membrane assembly produced according to the process of the invention.

The present invention also includes within its scope an electrochemical cell which comprises one or more frame/membrane assemblies produced according to the process of the invention.

The present invention will be further described with reference to the following Examples.

### EXAMPLE 1

Strips of membrane material (Du Pont's Nafion 117) 25mm wide and approximately 60mm long, were dried under vacuum at 60°C for 30 minutes to remove water from the membrane. Solutions comprising 1g or 2g poly(vinylidene fluoride) dissolved in 40cc of N-methyl-pyrrolidone (NMP) were prepared. Each solution was then applied to the freshly dried membrane by dipping. The coated membranes were then allowed to stand in air. The membranes coated with PVDF were then joined to a poly(vinylidene fluoride) frame using induction heating in the following way. A loop of stainless steel wire was fixed to a ceramic insulator in close proximity to an induction workcoil connected to a high frequency (approximately 180 kHz) power supply. The workcoil heated the stainless steel wire to a temperature of approximately 200°C and this heated the membrane samples and frame materials, causing a joint to form after approximately 30 seconds.

The joints formed in this way and tested manually were generally weak in peel but relatively strong in tensile. Three specimen joints were immersed in water for over three weeks and then manually tested. The mechanical properties of these joints were unchanged compared to joints tested immediately after joining.

### EXAMPLE 2

Following the procedure of Example 1, a solution of 2g of poly(vinylidene fluoride) in 40cc of NMP was applied to Nafion 117 (DuPont). The coated membrane was then allowed to stand.

The membrane was then joined to a PVDF frame using a 3mm wide hot bar weld at 260°C at a pressure of 48.2kPa (7psi) for 3 seconds. A good join was produced.

### EXAMPLE 3

Following the procedure of Example 1, a Nafion 115 membrane was dipped in a solution comprising 1g of poly(vinyl chloride) dissolved at room temperature in 20cc tetrahydrofuran.

The membrane was then joined to a PVC frame using a 3mm wide hot bar weld at 175°C at a pressure of 68.9 kPa (lOpsi) for 5 seconds. A good join was produced.

A similar good join was obtained using a bar temperature of 210°C at a pressure of 7psi for 3 seconds.

### EXAMPLES 4 to 28

Strips of membrane (Nafion 117 or 115) were prepared 25mm wide and approximately 60mm long in the as-received state. Solutions comprising 1g or 2g of polymeric material dissolved in 40cc of solvent were prepared. Each solution was applied to the membrane by brushing as a polymeric layer. The membranes coated with the polymeric layer were then joined to polymeric frame materials in the following way. A 3mm wide strip of nichrome electrically resistive tape was protected by a PTFE sheet to prevent sticking, and heated to the temperature indicated. This heated the membrane samples and frame materials, causing a joint to form after the time indicated.

The results obtained are given in the following Table 1.

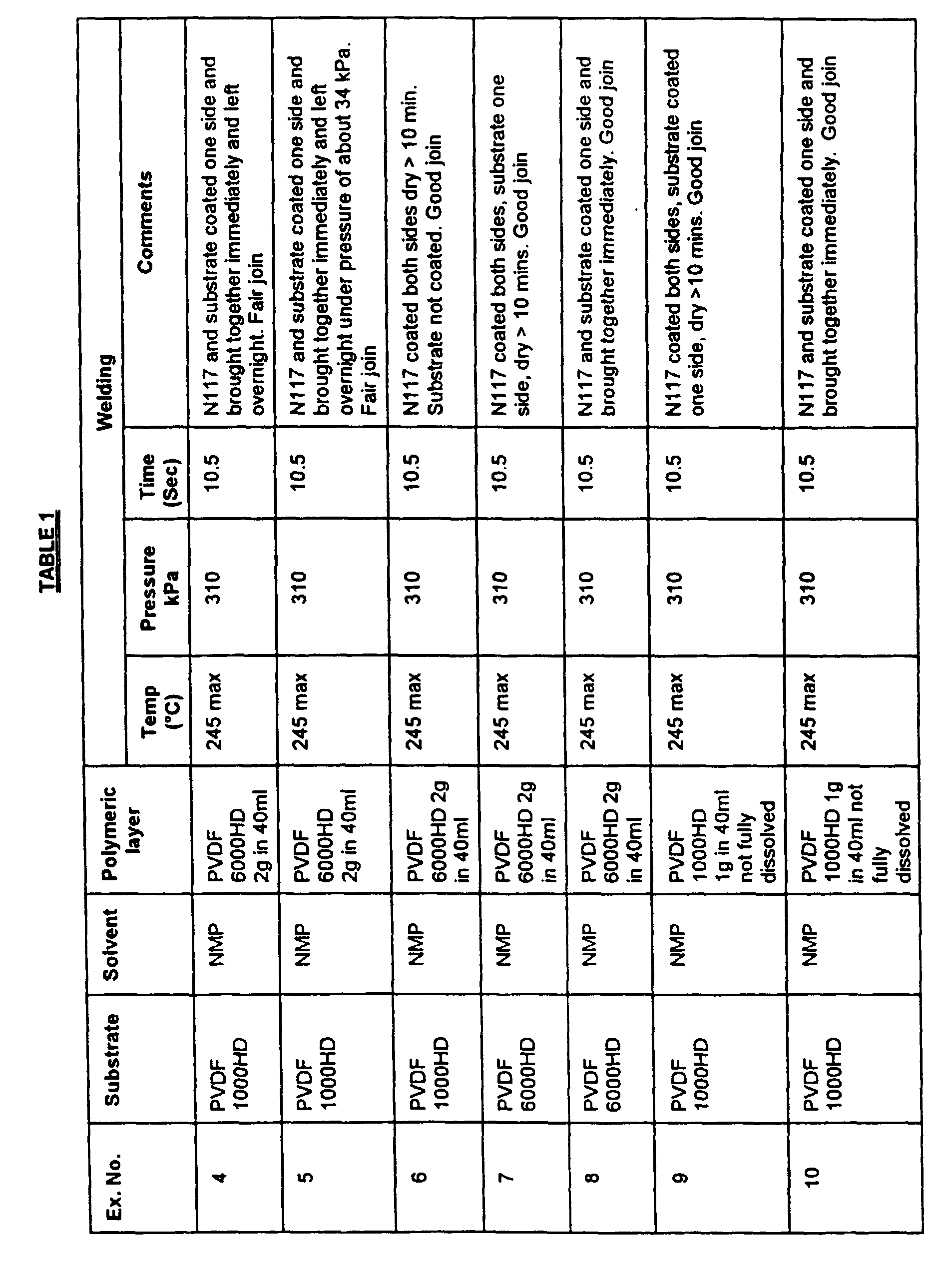

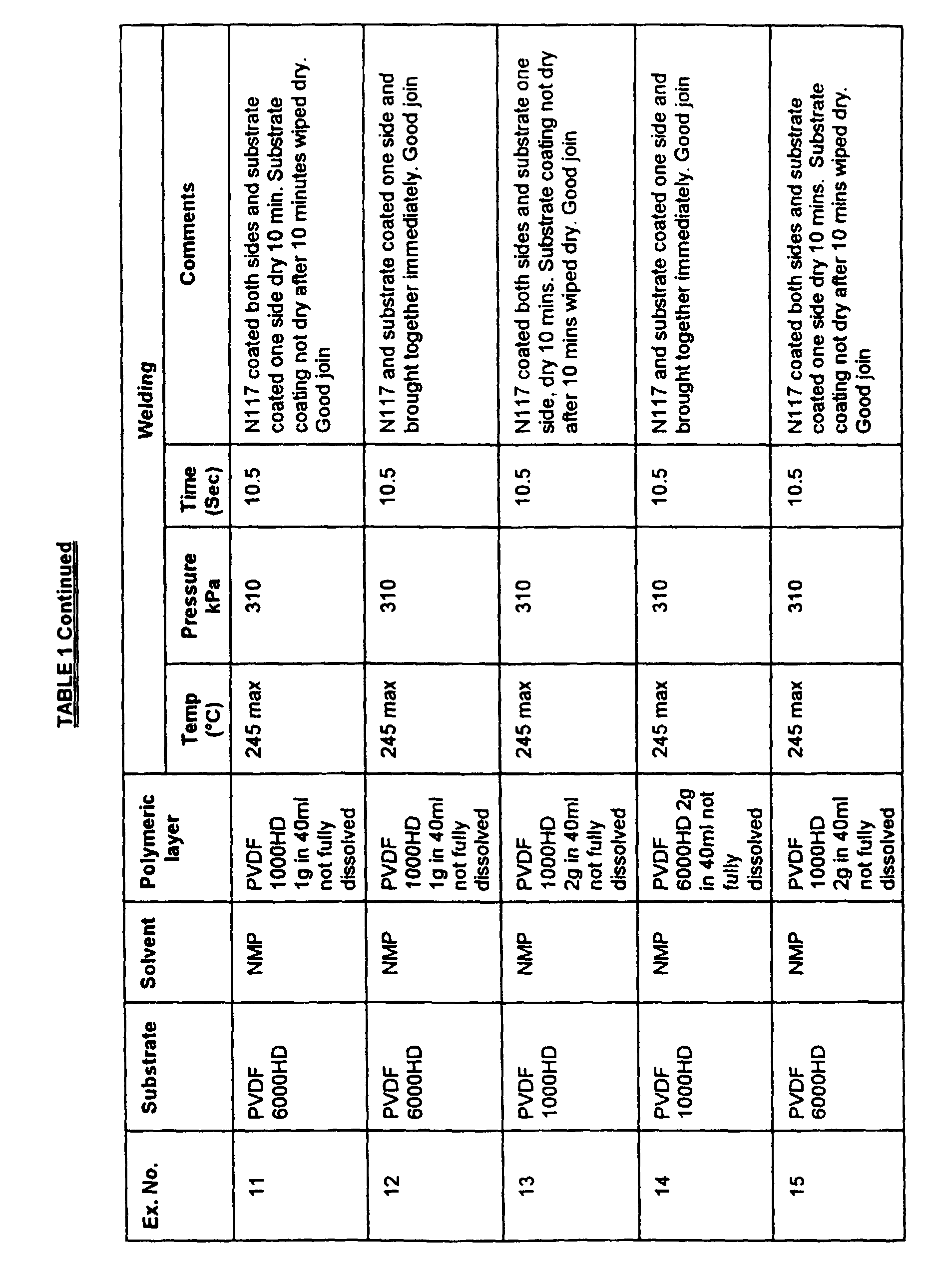

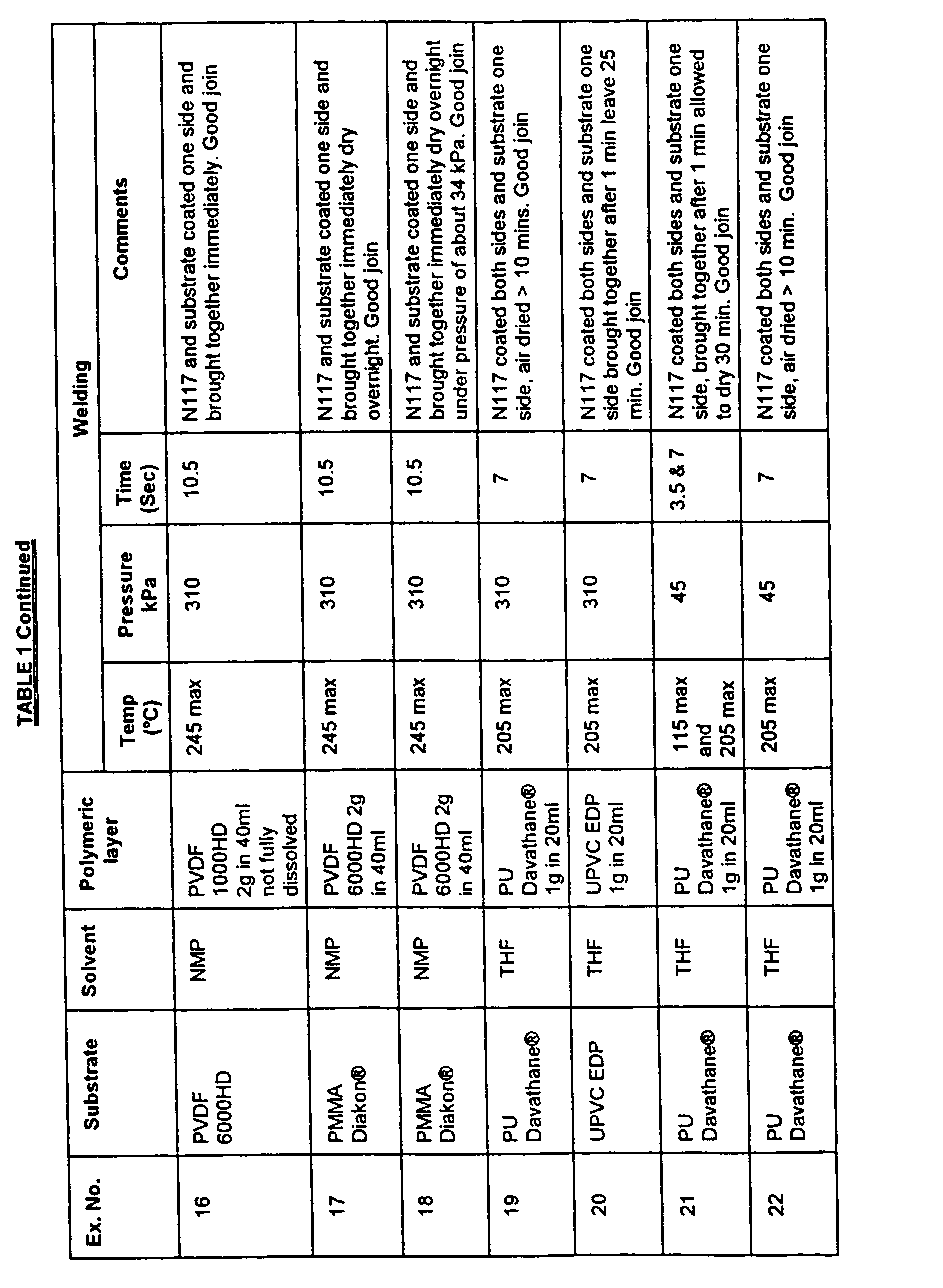

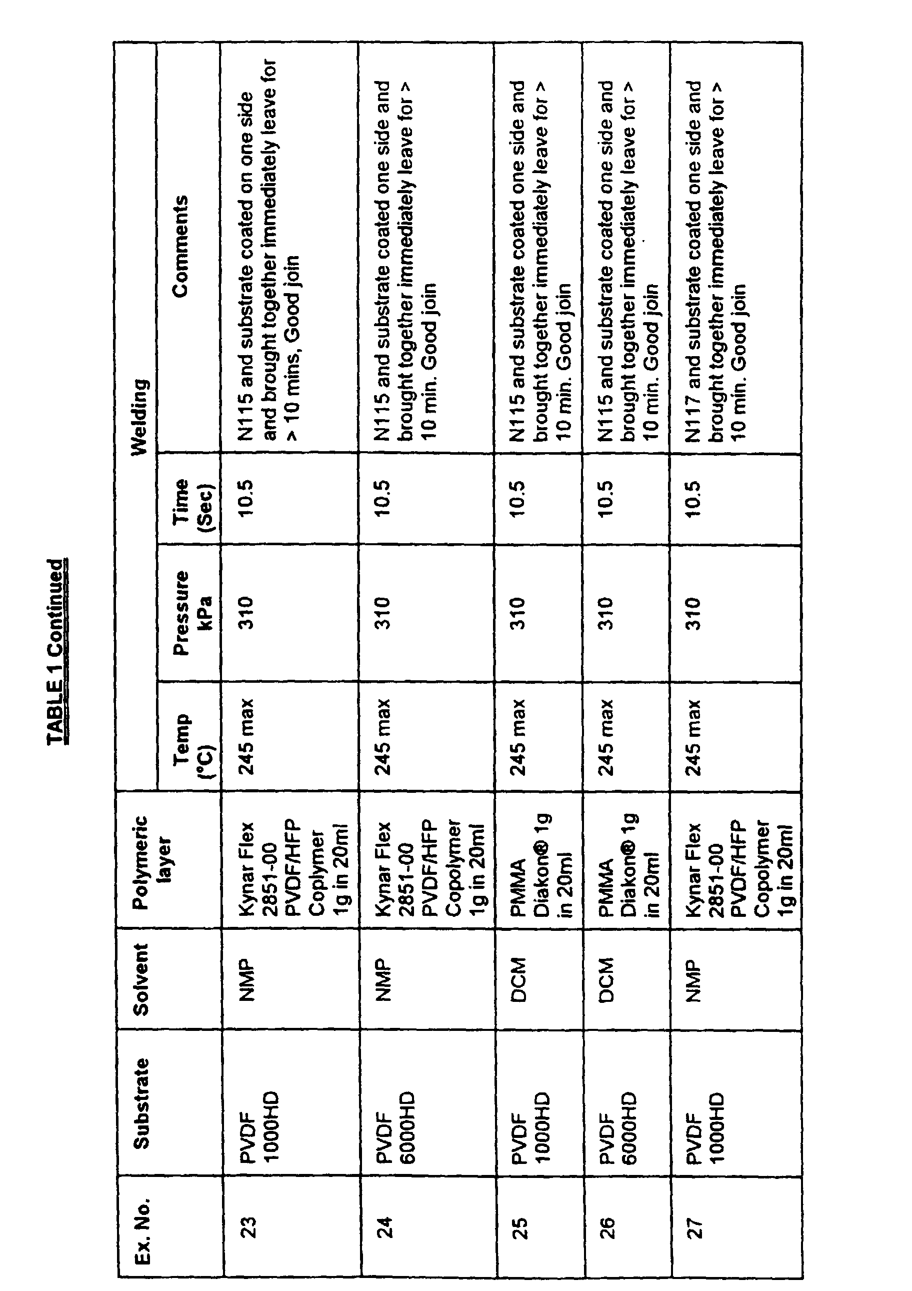

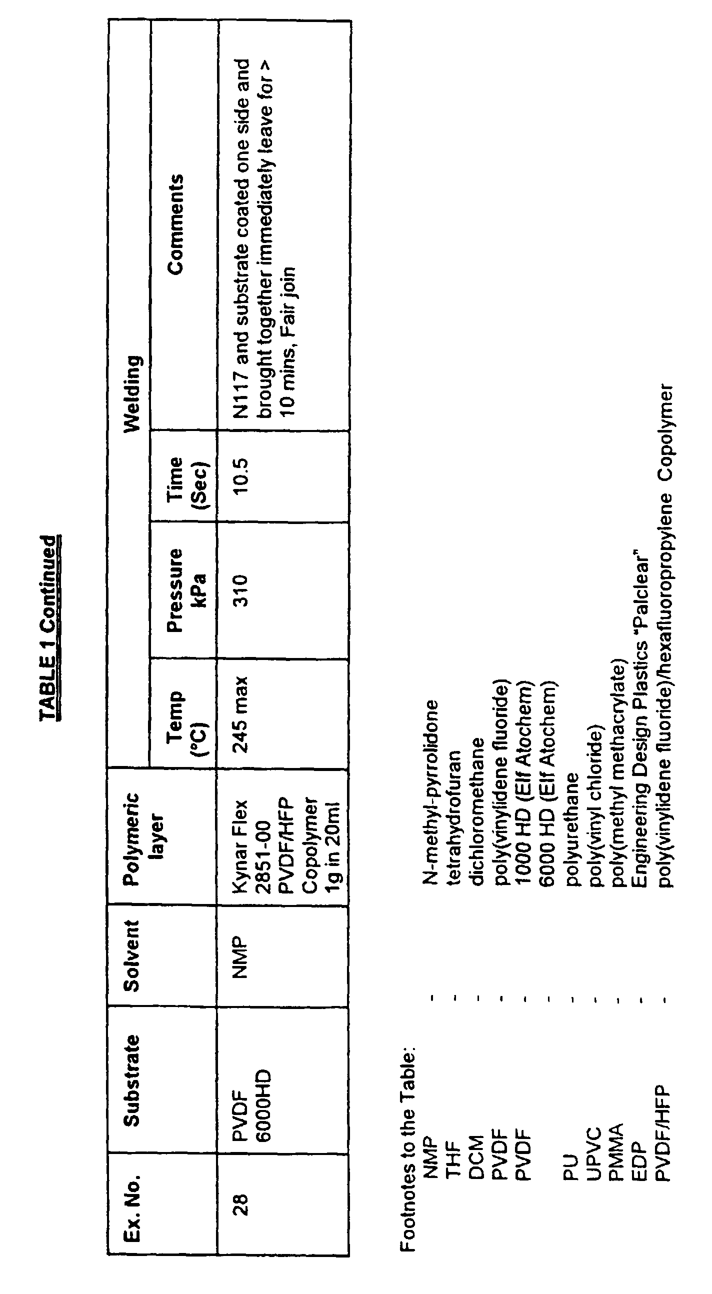

## Claims

1. A process for the fabrication of an electrochemical cell component which comprises a water-containing ion exchange membrane joined to a frame member formed from a dissimilar polymeric material, which process comprises the steps of:
i) coating the border of at least one face of a water-containing ion exchange membrane with a solution in a water-miscible solvent of the polymeric material from which the said frame member is made, or of a polymeric material which is compatible with the polymeric frame material;
ii) optionally allowing the said coated membrane to stand and/or drying the said coated membrane;
iii) placing the coated face of the ion exchange membrane from step (i) or step (ii) in contact with the said frame member; and
iv) joining the coated ion-exchange membrane to the said frame member.

2. A process as claimed in claim 1 wherein the frame member is made from poly(vinylidene fluoride) or poly(vinyl chloride), polyurethane or poly(methyl methacrylate).

3. A process as claimed in claim 1 or claim 2 wherein the solvent in which the polymeric material is dissolved or dispersed is methanol, ethanol, dimethyl formamide, dimethylsulfoxide, tetrahydrofuran or N-methyl-pyrrolidone.

4. A process as claimed in any one of the preceding claims wherein the membrane is coated by roller coating, K-bar coating, painting or screen printing.

5. A process as claimed in any one of the preceding claims wherein the membrane is a cation exchange membrane.

6. A process as claimed in claim 5 wherein the cation exchange membrane is a copolymer of tetrafluoroethylene and a sulfonated or carboxylated vinyl ether.

7. A process as claimed in claim 5 or claim 6 wherein the membrane has a thickness in the range of from 50 to 125µm.

8. A process as claimed in any one of the preceding claims wherein the coated membrane is dried in step (ii) using heat.

9. A process as claimed in any one of the preceding claims wherein the coated membrane is joined to the frame using heat and pressure.

10. A process as claimed in claim 9 wherein the joining of the membrane to the frame is carried out at a temperature at or above the melting point of the frame material.

11. A frame/membrane assembly which has been produced by a process as claimed in any one of the preceding claims.

12. An electrochemical cell which comprises one or more frame/membrane assemblies as claimed in claim 11.

## Patentansprüche

1. Verfahren zur Herstellung eines elektrochemischen Zellenbausteins, der eine wasserhaltige Ionen-Austauschmembran enthält, die mit einem Rahmenelement verbunden ist, das aus einem andersartigen Polymermaterial hergestellt ist, mit den Schritten:
i) Beschichten des Randes wenigstens einer Seite einer wasserhaltigen Ionen-Austauschmembran mit einer Lösung eines mit Wasser vermischbaren Lösungsmittels des Polymermateriales, aus welchem der Rahmen hergestellt ist, oder eines Polymer-Materials, das mit dem Rahmen-Polymer-Material kompatibel ist;
ii) Wahlweises Stehen- und/oder Trocknen-lassen der beschichteten Membran;
iii) Plazieren der beschichteten Seite der Ionen-Austauschmembran vom Schritt (i) oder Schritt (ii) in Kontakt mit dem Rahmenelement; und
iv) Verbinden der beschichteten Ionen-Austauschmembran mit dem Rahmenelement.

2. Verfahren nach Anspruch 1, wobei das Rahmenelement aus Poly(vinyliden-fluorid) oder Poly(vinyl-chlorid), Polyurethan oder Poly(methyl-methacrylat) hergestellt ist.

3. Verfahren nach Anspruch 1 oder 2, wobei das Lösungsmittel in welchem das Polymermaterial gelöst oder dispergiert wird, Methanol, Ethanol, Dimethyl-Formamid, Dimethylsulfoxid, Tetrahydrofuran oder N-Methyl-Pyrrolidon ist.

4. Verfahren nach einem der vorstehenden Ansprüche, wobei die Membran durch Walzbeschichten , K-Stab-Beschichten, Aufstreichen oder Siebdrucken beschichtet wird.

5. Verfahren nach einem der vorstehenden Ansprüche, wobei die Membran eine Kationen-Austauschmembran ist.

6. Verfahren nach Anspruch 5, wobei die Kationen-Austauschmembran ein Copolymer von Tetrafluorethylen und ein sulfonierter oder carboxilierter Vinylether ist.

7. Verfahren nach Anspruch 5 oder 6, wobei die Membran eine Dicke im Bereich von 50-125 µm hat.

8. Verfahren nach einem der vorstehenden Ansprüche, wobei die beschichtete Membran im Schritt (ii) unter Verwendung von Hitze getrocknet wird.

9. Verfahren nach einem der vorstehenden Ansprüche, wobei die beschichtete Membran mit dem Rahmen unter Verwendung von Hitze und Druck verbunden wird.

10. Verfahren nach Anspruch 9, wobei das Verbinden der Membran mit dem Rahmen bei einer Temperatur auf der Höhe oder oberhalb des Schmelzpunktes des Rahmenmaterials durchgeführt wird.

11. Eine Rahmen/Membran-Baugruppe, die durch ein Verfahren wie in einem der vorstehenden Patentansprüche beansprucht, hergestellt worden ist.

12. Elektrochemische Zelle mit einer oder mehreren Rahmen/Membran-Baugruppen wie im Anspruch 11 beansprucht.

## Revendications

1. Procédé de fabrication d'un composant de cellule électrochimique qui comprend une membrane échangeuse d'ions contenant de l'eau jointe à un élément de cadre formé d'une matière polymère différente, lequel procédé comprend les étapes consistant à :
i) revêtir le bord d'au moins une face d'une membrane échangeuse d'ions contenant de l'eau avec une solution dans un solvant miscible à l'eau de la matière polymère dont ce cadre est constitué, ou d'une matière polymère qui est compatible avec la matière polymère du cadre ;
ii) laisser reposer facultativement cette membrane revêtue et/ou sécher cette membrane revêtue ;
iii) mettre la face revêtue de la membrane échangeuse d'ions provenant de l'étape (i) ou de l'étape (ii) en contact avec cet élément de cadre ; et
iv) joindre la membrane échangeuse d'ions revêtue à cet élément de cadre.

2. Procédé selon la revendication 1, dans lequel l'élément de cadre est constitué de poly(fluorure de vinylidène) ou de poly(chlorure de vinyle), de polyuréthanne ou de poly(méthacrylate de méthyle).

3. Procédé selon la revendication 1 ou la revendication 2, dans lequel le solvant dans lequel la matière polymère est dissoute ou dispersée est le méthanol, l'éthanol, le diméthylformamide, le sulfoxyde de diméthyle, le tétrahydrofuranne ou la N-méthylpyrrolidone.

4. Procédé selon l'une quelconque des revendications précédentes, dans lequel la membrane est revêtue par enduction au rouleau, enduction à la barre K, peinture ou sérigraphie.

5. Procédé selon l'une quelconque des revendications précédentes, dans lequel la membrane est une membrane d'échange de cations.

6. Procédé selon la revendication 5, dans lequel la membrane échangeuse de cations est un copolymère de tétrafluoréthylène et d'un éther vinylique sulfoné ou carboxylé.

7. Procédé selon la revendication 5 ou la revendication 6, dans lequel la membrane a une épaisseur dans l'intervalle de 50 à 125 micromètres.

8. Procédé selon l'une quelconque des revendications précédentes, dans lequel la membrane revêtue est séchée par la chaleur dans l'étape (ii).

9. Procédé selon l'une quelconque des revendications précédentes, dans lequel la membrane revêtue est jointe au cadre à chaud et sous pression.

10. Procédé selon la revendication 9, dans lequel la jonction de la membrane au cadre est effectuée à une température égale ou supérieure au point de fusion de la matière du cadre.

11. Assemblage cadre/membrane qui a été fabriqué par un procédé selon l'une quelconque des revendications précédentes.

12. Cellule électrochimique qui comprend un ou plusieurs assemblages cadre/membrane selon la revendication 11.
